# FASCICULE DE BREVET EUROPEEN

(11) **EP 2 389 287 B1**
(45) Date de publication et mention de la délivrance du brevet: **23.04.2014**
(21) Numéro de dépôt: 10701230.4
(22) Date de dépôt: 20.01.2010
(51) Int. Cl.: B29C 70/30, B29C 70/48, B29L 31/24, B29K 71/00

(54) **PROCÉDÉ DE RÉALISATION DE PIÈCES COMPOSITES DE FORME COMPLEXE**
VERFAHREN ZUR HERSTELLUNG VON VERBUNDTEILEN MIT KOMPLEXEN FORMEN
METHOD FOR MAKING COMPOSITE PARTS HAVING COMPLEX SHAPES

(30) Priorité: 22.01.2009 FR 0900281
(43) Date de publication de la demande: 30.11.2011
(73) Titulaire: European Aeronautic Defence And Space Company Eads France, 75016 Paris (FR); Composites Atlantic Limited, Lunenburg, NS BOJ-2CO (CA)
(72) Inventeur: CAVALIERE, Frédérick, F-78180 Montigny Le Bretonneux (FR); GUITTON, Maurice, Lunenburg, Nova Scotia BOJ 2CO (CA); GUITTON, Severine, Lunenburg, Nova Scotia BOJ 2CO (CA)
(74) Mandataire: Fourcade, Emmanuelle
(86) Numéro de dépôt international: PCT/EP2010/050644
(87) Numéro de publication internationale: WO 2010/084133

(56) Documents cités:
- US-A- 5 262 121
- US-A- 6 126 774
- US-B1- 6 630 093
- M. SHMIDT, D. POHLE, T. RECHTENWALD: "Selective Laser Sintering of PEEK" ANNALS OF THE CIRP, [Online] vol. 56, no. 1, janvier 2007 (2007-01), pages 205-208, XP002540089 Extrait de l'Internet: URL:http://www.sciencedirect.com/science?_ ob=ArticleURL&_udi=B8CXH-4NYTYGN-1S&_user= 987766&_rdoc=1&_fmt=&_orig=search&_sort=d& _docanchor=&view=c&_searchStrId=972747601& _rerunOrigin=google&_acct=C000049880&_vers ion=1&_urlVersion=0&_userid=987766&md5=936 4330a7b8bbf3f9366e0b50c29f269> [extrait le 2009-08-05]

## Description

La présente invention appartient au domaine des pièces composites. Elle concerne plus particulièrement les procédés de réalisation de pièces de forme complexe. Encore plus spécifiquement, l'application visée concerne notamment la réalisation de pièces tubulaires de type tuyauteries aéronautiques destinées au circuit d'air.

Dans le domaine aéronautique, les matériaux composites sont de plus en plus largement utilisés pour la réalisation de pièces, en particulier structurales. On entend par pièces structurales des pièces faisant partie de la structure primaire de l'aéronef, laquelle reprend les efforts mécaniques crées par les moteurs, les ailes et les trains d'atterrissage notamment.

Cependant, un nombre croissant de pièces non structurales sont aujourd'hui également réalisées en matériaux composites.

Les matériaux dont il est question sont typiquement constitués de nappes de fibres, éventuellement croisées, noyées dans une résine thermodurcissable.

Concernant ces pièces, de nombreux travaux sont conduits sur les procédés de réalisation habituellement employés afin de :
- diminuer le coût de revient des pièces (qui inclut en particulier le coût des outillages, le temps de réalisation, l'assemblage si ces pièces sont réalisées en plusieurs morceaux destinés à être assemblés),
- d'intégrer plus de fonctions (ce qui se traduit par une augmentation de la complexité géométrique et donc de la réalisation des pièces),
- d'identifier des matériaux permettant de mieux répondre aux exigences de sécurité (notamment aux normes de feu, fumée, toxicité)

C'est le cas notamment des pièces non structurales de type tuyauteries de canalisations aéronautiques pour le circuit d'air, qui sont réalisées par morceaux puis assemblées. Ces pièces présentent souvent une grande complexité. Leur forme extérieure comporte éventuellement des ramifications, des coudes, elle est souvent de section variable. De plus, l'intérieur de ces tuyauteries présente éventuellement un déflecteur ou séparation.

Ces contraintes géométriques nécessitent alors, pour la réalisation de ces pièces, de nombreux et coûteux outillages. Alternativement, elles sont réalisées en de nombreux segments assemblés par la suite. Par ailleurs, ces pièces sont soumises à des contraintes de matériaux, devant être réalisées avec des matériaux répondant à des normes de feu, fumée, toxicité etc.

L'objectif de cette invention est alors de proposer un procédé de fabrication de pièces composites aéronautiques de formes complexes, permettant :
- de diminuer et simplifier les outillages (objectif : réduction des coûts non récurrents),
- de simplifier la fabrication et assemblage des pièces (objectif : réduction des coûts récurrents),
- la création de formes très complexes non réalisables par les procédés traditionnels,
- l'utilisation des matériaux les plus adaptés pour répondre aux normes de feu, fumée, toxicité.

A cet effet, le procédé de réalisation de pièces de forme géométrique complexe, ladite forme géométrique comprenant par exemple des coudes, ramifications, déflecteurs, sections ou épaisseurs variables, comprend des étapes :
- de création d'une pièce-noyau de géométrie principalement similaire à la forme recherchée, sauf en ce qui concerne l'épaisseur extérieure, par un procédé de création tridimensionnelle,
- d'enveloppement d'au moins une de cette pièce-noyau par des fibres préalablement ou postérieurement imprégnées de résine, de manière à aboutir aux dimensions finales de la forme recherchée après durcissement de la résine,
- de durcissement de la résine.

On comprend qu'il s'agit d'un procédé de réalisation de pièce de forme géométrique complexe en matériau composite doté d'une structure renforcée de fibres.

Eventuellement, le procédé comprend également une étape d'assemblage de la pièce-noyau avec des pièces complémentaires, avant enveloppement d'au moins une partie de l'ensemble par des fibres préalablement ou postérieurement imprégnées de résine.

Cette disposition concerne le cas de pièces finales en plusieurs parties, dont un élément de forme très complexe, et par exemple des éléments tubulaires de forme simple, l'ensemble devant être enrobé conjointement de fibres imprégnées de résine pour des raisons mécaniques ou autres.

Le procédé de création tridimensionnelle est un procédé de fusion laser (SLS).

La résine thermoplastique utilisée est une résine thermoplastique très haute température.

Plus particulièrement, il s'agit d'une la résine thermoplastique très haute température de type PEEK (polyétheréthercétone).

On comprend que l'invention combine des procédés connus de réalisation de pièces composites employés dans l'aéronautique et un procédé de fusion laser, a priori non utilisé dans le domaine aéronautique car produisant des pièces inaptes à répondre aux contraintes d'une utilisation en milieu aéronautique aux normes de sécurité sévères.

Dans le domaine de la fabrication de pièces de forme complexe, on connaît, typiquement dans le domaine médical, des procédés du type fusion laser (en anglais laser sintering) habituellement utilisés pour la réalisation sans outillages de pièces métalliques de prototypage à partir de poudres.

De façon simplifiée, un procédé de fusion laser de type SLS (Selective Laser Sintering), également parfois appelé impression directe métal en 3D, est une technique de frittage (chauffage et fusion) laser sélectif sans phase liquide.

On créé ainsi des objets présentant une géométrie tridimensionnelle aussi complexe que souhaitée, couche par couche, constituées au fur et à mesure sur la couche inférieure, en utilisant l'énergie d'un laser pour entraîner la fusion locale d'une poudre (métal, nylon, polystyrène...) à l'endroit sélectionné, correspondant à une future partie pleine de la pièce souhaitée.

Le procédé s'apparente au prototypage rapide avec utilisation de poudres. Comme on l'a vu, la pièce est réalisée à partir d'un lit de poudre par consolidation de tranches successives dans une machine industrielle.

Le laser consolide la tranche en surface du lit de poudre préchauffé, le support machine s'enfonce d'une distance déterminée, un système de distribution (généralement un rouleau) dépose une nouvelle couche de poudre, consolidation d'une nouvelle tranche par laser, etc.

La pièce finale obtenue peut présenter une forme très complexe. Aucun outillage (moulage, usinage etc.) n'est nécessaire pour la réalisation de la pièce obtenue par ce procédé de fusion laser.

Le temps de réalisation des pièces dépend des dimensions et de la qualité de pièce souhaitée. Il peut être relativement long. Cependant plusieurs pièces peuvent être réalisées en même temps ce qui rend le procédé intéressant d'un point de vue industriel.

Ces procédés commencent à être utilisés avec des poudres composites. Le procédé de fusion laser est, par exemple, relativement bien développé pour des poudres du type polyamide (PA).

Les pièces en polyamide sont plutôt destinées à être des pièces de démonstration de type prototypage rapide. Leur durée de vie est relativement faible du fait de leur tenue mécanique limitée.

Des pièces en résine de type PEEK ont également été réalisées par ce procédé, et sont particulièrement destinées à des pièces sur mesure pour applications médicales (par exemple prothèses cervicales).

Cependant pour des raisons comportement matériau et températures de mise en oeuvre, la résine PEEK (poudre thermoplastique très haute température) est plus difficile à mettre en oeuvre que la résine polyamide.

On rappelle que la résine thermoplastique connue sous le nom PEEK (polymère polyétheréthercétone) est une résine à grande plasticité, utilisée par exemple comme revêtement de pièces mécaniques non lubrifiées.

Sa température de fusion est de 350°C, d'où son appellation de résine très haute température. Cette caractéristique la rend utilisable dans des applications aéronautiques. Elle peut alors être utilisée comme résine thermoplastique (déjà polymérisée, par opposition aux résines thermodurcissables, qui polymérisent lors d'une phase de cuisson du demi-produit) d'imprégnation de fibres dans le cadre de réalisation de pièces en matériaux composites.

Les résines thermoplastiques présentent en outre des avantages de bonne résistance à l'impact, au feu, et à l'humidité.

Par contre, de façon générale, les pièces obtenues par un procédé le fusion laser ne sont, du fait de leur mode de réalisation, pas renforcées de fibres. Leurs caractéristiques mécaniques sont donc a priori faibles, et en conséquence, ces pièces ne sont pas spontanément destinées au marché aéronautique. Il s'agit le plus souvent de pièces prototypes, et non de pièces destinées à une utilisation réelle ou à une fabrication en série.

On connaît par ailleurs dans le domaine aéronautique divers procédés pour réaliser des pièces en matériaux composites.

Parmi ces procédés on peut notamment citer :
- le procédé de drapage de tissus ou nappes fibres longues préimprégnés de résine thermodurcissable ou thermoplastique,
- le procédé de moulage par transfert de résine "RTM" (Resin Transfer Molding) : réalisation d'une préforme fibreuse avec imprégnation dans une deuxième étape de résine thermodurcissable,

Ces procédés nécessitent une opération de polymérisation (résine thermodurcissable) ou consolidation (résine thermoplastique) en température, sous vide, et généralement sous pression.

Ces procédés sont utilisés pour la réalisation de pièces structurales ou non structurales.

L'invention combine donc un procédé issu du domaine médical, en choisissant par ailleurs un matériau de travail adapté aux contraintes du domaine aéronautique, avec des procédés connus en aéronautique, pour atteindre un résultat de pièce de forme aussi complexe que désiré, mais compatible avec une utilisation aéronautique, de façon conforme aux objectifs de l'invention.

Selon un premier mode de réalisation, l'enveloppement de la pièce-noyau est réalisé en utilisant un procédé de drapage de la pièce-noyau par des nappes ou de tissus pré-imprégnées de résine.

Alternativement, l'enveloppement de la pièce-noyau est réalisé en utilisant un procédé de moulage par transfert de résine.

Préférentiellement, dans l'étape de création de la pièce-noyau, au moins une partie de la surface de ladite pièce-noyau destinée à recevoir les fibres, est rendue rugueuse pour favoriser l'accroche mécanique avec la résine d'imprégnation des fibres.

Ceci est particulièrement utile dans le cas de résine thermodurcissable.

La description qui va suivre, donnée uniquement à titre d'exemple d'un mode de réalisation de l'invention, est faite en se référant aux figures annexées dans lesquelles
la figure 1 illustre une pièce-noyau destinée à une canalisation d'air, réalisée en PEEK par fusion laser,
la figure 2 montre l'intégration de cette pièce-noyau au sein d'une pièce plus grande comportant des éléments tubulaires en aluminium,
la figure 3 illustre le drapage formant la pièce complète,
la figure 4 illustre la pièce complète dans son état finalisé.

Le procédé selon l'invention consiste à utiliser une pièce composite réalisée en PEEK par un procédé de fusion laser, cette pièce PEEK servant de support lors de la réalisation d'une pièce composite par des procédés connus en soi de préimprégné ou de moulage par transfert de résine (RTM).

De façon plus détaillée, le procédé est mis en oeuvre à partir des spécifications d'une pièce complète à réaliser. Ces spécifications sont obtenues par des méthodes de conception classiques, par exemple par utilisation de logiciels de CAO.

Le procédé comprend alors une première étape 100 de réalisation d'une pièce-noyau 1 par procédé de fusion laser (SLS), travaillant sur un matériau de type résine très haute température, ici un polymère polyétheréthercétone (PEEK par abréviation).

Les données de conception de la pièce-noyau 1 à réaliser sont obtenues à partir des données de conception de la pièce complète, en tenant compte de l'épaisseur à venir de fibres imprégnées de résine sur une partie de la surface de la pièce (et de leur éventuelle variation lors d'une phase de durcissement). Ces données relatives à la pièce-noyau 1 à réaliser sont alors intégrées dans un logiciel de pilotage du dispositif de fusion laser utilisé.

Le procédé de fusion laser est supposé connu en soi, et n'est donc pas détaillé plus avant ici. Les dimensions de la pièce-noyau à réaliser sont limitées uniquement par les caractéristiques du dispositif de fusion laser.

De même, le matériau PEEK et ses conditions de mise en oeuvre sont supposés connus en soi.

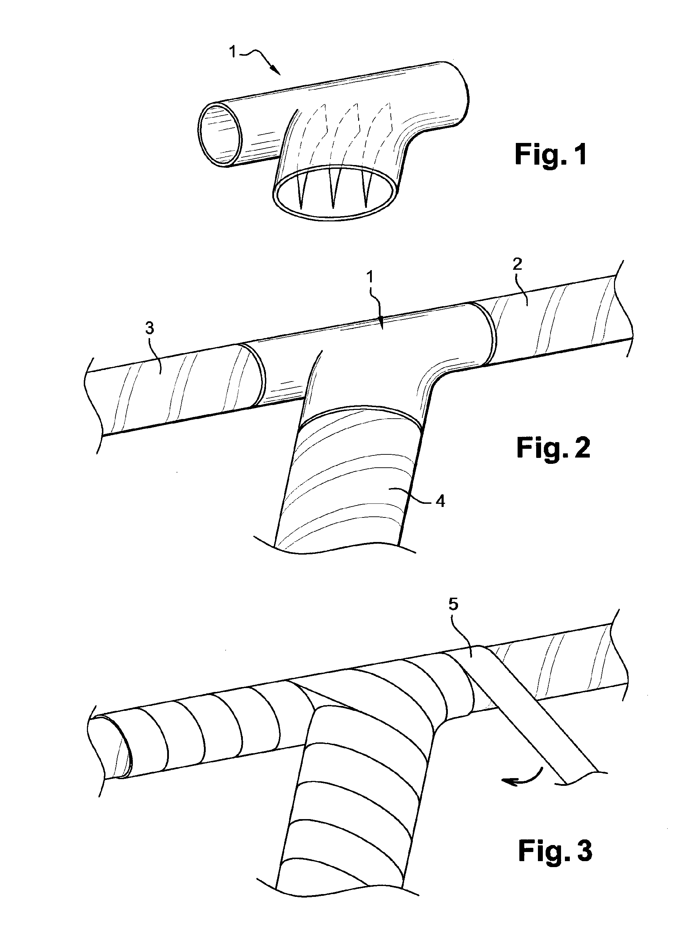

On voit sur la figure 1 la pièce-noyau 1, une fois réalisée par procédé de fusion laser. Cette pièce-noyau 1 comporte ici une ramification coudée incluant dans sa partie intérieure trois déflecteurs. Elle est clairement difficile à réaliser par des méthodes classiques. Elle pourrait en fait comporter de multiples ramifications, séparations internes en conduits distincts, variations de section ou d'épaisseur, sans modifications de cette étape du procédé.

La pièce-noyau 1 est donc réalisée avec des dimensions intérieures conformes aux spécifications de la pièce finale à réaliser, et des dimensions extérieures adaptées en tenant compte de l'épaisseur à venir de fibres imprégnées.

La surface de la pièce-noyau en PEEK est rendue rugueuse, par des méthodes connues, pour favoriser l'accroche mécanique avec la résine des tissus (notamment dans le cas de résines thermodurcissables).

Dans une second étape 105 du procédé (figure 2), la pièce-noyau 1 est assemblée avec des outillages 2, 3, 4, ici de type tubulaires en aluminium. Ces outillages, de forme géométrique simple, sont réalisés par des méthodes connues en soi. Leurs sections terminales sont naturellement adaptées à un assemblage correct avec les sections terminales de la pièce-noyau. Elles présentent également des dimensions extérieures adaptées à leur futur enrobage dans des fibres imprégnées. La surface de ces outillages 2, 3, 4 est éventuellement traitée en vue de leur enrobage par fibres imprégnées, puis de leur extraction.

Dans une étape suivante 110 (figure 3), la pièce intermédiaire assemblée obtenue à l'issue de l'étape précédente est enveloppée de tissus ou de nappes 5 de fibres préimprégnées de résine (thermodurcissable dans le présent exemple), ici par enroulement autour des différents segments de la pièce. On note que le drapage concerne la pièce-noyau 1 et les outillages 2, 3, 4. Le drapage est réalisé par une technique connue en soi.

La résine thermodurcissable peut être époxy, phénolique, autres résines répondant aux normes feu, fumée, toxicité et avec une température de polymérisation ne dépassant pas 200°C (pour éviter de s'approcher de la température de fusion de la résine PEEK).

On note que les parois de la pièce PEEK doivent être étanches pour permettre le drapage des tissus ou nappes.

En variante, le procédé de drapage est remplacé par un procédé de moulage par transfert de résine RTM. Il s'agit alors de réaliser sur la pièce-noyau 1 en résine très haute température PEEK une préforme fibreuse sèche qui est ensuite imprégnée de résine dans un outillage ou un environnement étanche prévu à cet effet.

Le procédé de moulage par transfert de résine (RTM, procédé connu en soi) se caractérise par le fait que des couches de fibres sèches prédécoupées sont placées dans un moule, qui est scellé, et dans lequel on injecte une résine, qui vient imprégner les fibres. Dans le cas de fibres imprégnées de résine thermodurcissable, une polymérisation de la résine est ensuite réalisée.

Dans les deux cas, dans une étape suivante 120, la pièce complète est finalisée par polymérisation ou consolidation de la résine, puis les outillages 2, 3, 4 sont extraits, ici par traction selon leur axe.

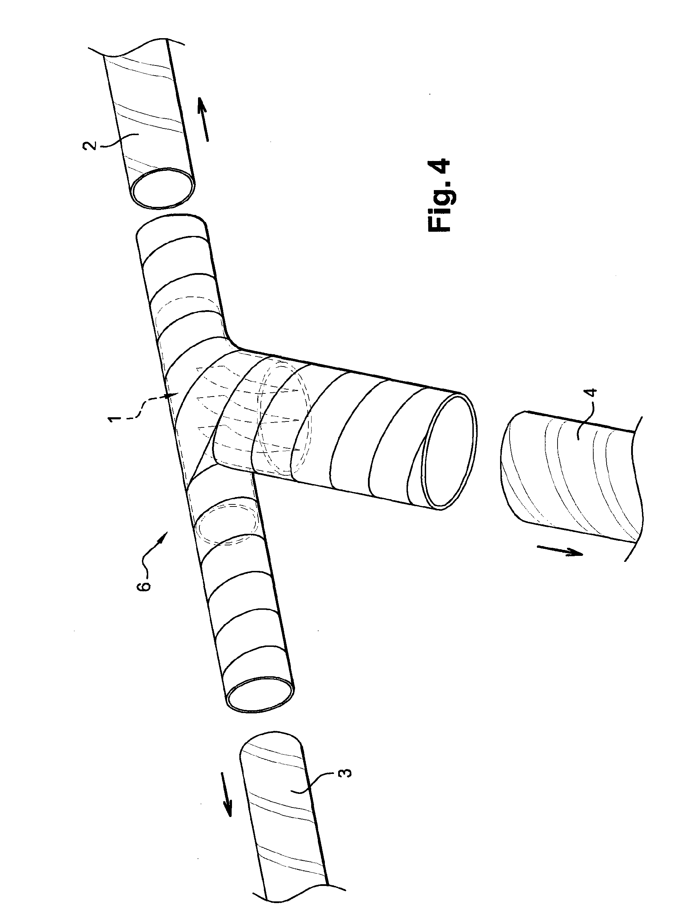

La figure 4 illustre alors l'état final de la pièce complète 6.

Le procédé est particulièrement adapté aux pièces fermées ou de révolution (par exemple pièces tubulaires). Dans ce cas le drapage des tissus ou nappes se fait autour de la pièce PEEK. Cet exemple d'application n'est pas limitatif du domaine d'application du procédé.

L'intérêt de combiner les deux procédés permet de profiter des avantages de chaque procédé, et minimiser les inconvénients :
1/ la pièce PEEK est réalisée sans outillage.
2/ la pièce PEEK peut avoir une forme complexe avec intégration de fonctions, avec un impact négligeable sur le coût de réalisation.
3/ le drapage des tissus s'effectue sur la pièce PEEK, ce qui ne nécessite pas ou peu d'outillages. Lorsque des outillages sont utilisés, il s'agit d'outillages nettement plus simples que ceux qui seraient nécessaires à la réalisation des pièces de formes complexes par les techniques traditionnelles.
4/ les tissus ou nappes apportent le renforcement nécessaire à l'obtention de propriétés mécaniques suffisantes pour la pièce finale. La tenue mécanique de la pièce PEEK doit donc uniquement permettre l'opération de drapage et/ou imprégnation, puis polymérisation. Ce qui permet de simplifier la conception et la réalisation de la pièce PEEK. La température de polymérisation des résines utilisées ne dépasse pas 200°C. Ce niveau de température permet de ne pas modifier la géométrie de la pièce PEEK.
5/ la résine PEEK répond très bien aux normes feu, fumée, toxicité.

La portée de la présente invention ne se limite pas aux détails des formes de réalisation ci-dessus considérées à titre d'exemple, mais s'étend au contraire aux modifications à la portée de l'homme de l'art.

## Revendications

1. Procédé de réalisation de pièces composites (6) tubulaires de forme géométrique complexe,
**caractérisé en ce qu'**il comprend des étapes :
100 - de création d'une pièce-noyau (1) de géométrie principalement similaire à la forme recherchée, sauf en ce qui concerne l'épaisseur extérieure, par un procédé de création tridimensionnelle, ladite forme géométrique comprenant notamment au moins l'un des éléments suivants : à l'extérieur du tube : coude, ramification, section variable, ou à l'intérieur du tube : déflecteur, séparation,
105 - d'assemblage de la pièce-noyau (1) avec au moins un outillage (2, 3, 4), disposé au niveau d'une des sections terminales de ladite pièce-noyau
110 - d'enveloppement d'au moins une partie de cette pièce-noyau (1) par des fibres (5) préalablement ou postérieurement imprégnées de résine, jusqu'à aboutir aux dimensions finales de la forme recherchée,
120 - de durcissement de la résine, et d'extraction desdits outillages de la pièce complète (6),
le procédé de création tridimensionnelle étant un procédé de fusion laser (SLS), et la pièce-noyau (1) étant réalisée en résine thermoplastique très haute température.

2. Procédé selon la revendication 1, **caractérisé en ce que** la résine thermoplastique très haute température est de type PEEK (polyétheréthercétone).

3. Procédé selon l'une quelconque des revendications précédentes, **caractérisé en ce que** le durcissement de la résine est obtenu par une phase de consolidation ou de polymérisation de ladite résine.

4. Procédé selon l'une quelconque des revendications précédentes, **caractérisé en ce que** l'enveloppement de la pièce-noyau (1) est réalisé en utilisant un procédé de drapage de la pièce-noyau (1) par des nappes ou de tissus pré-imprégnées de résine.

5. Procédé selon l'une quelconque des revendications 1 à 3, **caractérisé en ce que** l'enveloppement de la pièce-noyau (1) est réalisé en utilisant un procédé de moulage par transfert de résine.

6. Procédé selon l'une quelconque des revendications précédentes, **caractérisé en ce que** dans l'étape 100 de création de la pièce-noyau (1), au moins une partie de la surface de ladite pièce-noyau (1) destinée à recevoir les fibres (5), est rendue rugueuse pour favoriser l'accroche mécanique avec la résine d'imprégnation des fibres.

## Patentansprüche

1. Verfahren zur Herstellung von röhrenförmigen Verbundteilen (6) mit komplexer geometrischer Form,
**dadurch gekennzeichnet, dass** es die folgenden Schritte umfasst:
100- Herstellung eines Kernteils (1) mit einer Geometrie, die hauptsächlich der gewünschten Form, außer was die äußere Dicke betrifft, ähnlich ist, durch ein dreidimensionales Herstellungsverfahren, wobei die geometrische Form insbesondere mindestens eines der folgenden Elemente umfasst: außerhalb der Röhre: Knick, Verzweigung, variabler Querschnitt, oder innerhalb der Röhre: Ablenkblech, Trennung,
105- Zusammenbau des Kernteils (1) mit mindestens einem Werkzeug (2, 3, 4), das im Bereich eines der Endabschnitte des Kernteils angeordnet ist,
110- Umhüllung mindestens eines Teils dieses Kernteils (1) mit Fasern (5), die vorher oder nachher mit Harz imprägniert werden, bis die endgültigen Abmessungen der gewünschten Form erhalten werden,
120- Härten des Harzes und Entnahme der Werkzeuge aus dem vollständigen Teil (6),
wobei das dreidimensionale Herstellungsverfahren ein Laserfusionsverfahren (SLS) ist, und der Kernteil (1) aus thermoplastischem Harz sehr hoher Temperatur hergestellt ist.

2. Verfahren nach Anspruch 1, **dadurch gekennzeichnet, dass** das thermoplastische Harz sehr hoher Temperatur vom Typ PEEK (Polyetheretherketon) ist.

3. Verfahren nach einem der vorhergehenden Ansprüche, **dadurch gekennzeichnet, dass** das Härten des Harzes durch eine Verfestigungs- oder Polymerisationsphase des Harzes erzielt wird.

4. Verfahren nach einem der vorhergehenden Ansprüche, **dadurch gekennzeichnet, dass** die Umhüllung des Kernteils (1) unter Einsatz eines Verfahrens zum Abdecken des Kernteils (1) mit Schichten oder Geweben, die mit Harz vorimprägniert sind, erfolgt.

5. Verfahren nach einem der Ansprüche 1 bis 3, **dadurch gekennzeichnet, dass** die Umhüllung des Kernteils (1) unter Einsatz eines Formungsverfahrens mit Harztransfer erfolgt.

6. Verfahren nach einem der vorhergehenden Ansprüche, **dadurch gekennzeichnet, dass** in Schritt 100 der Herstellung des Kernteils (1) mindestens ein Teil der Oberfläche des Kernteils (1), die dazu bestimmt ist, die Fasern (5) aufzunehmen, aufgeraut wird, um die mechanische Haftung mit dem Imprägnierharz der Fasern zu begünstigen.

## Claims

1. Method for making composite tubular parts (6) having a complex geometrical shape,
**characterized in that** it comprises steps:
100 - of creation of a core part (1) having a geometry mainly similar to the shape sought, except with regard to the outer thickness, by a three-dimensional creation method, said geometrical shape notably comprising at least one of the following elements: on the outside of the tube: bend, branch, variable section, or on the inside of the tube: baffle, separation,
105 - of assembly of the core part (1) with at least one outfit (2, 3, 4), arranged at one of the terminal sections of said core part,
110 - of jacketing of at least a part of this core part (1) with fibres (5) previously or subsequently impregnated with resin, to end with the final dimensions of the shape sought,
120 - of hardening of the resin, and of extraction of said outfits from the complete part (6),
the three-dimensional creation method being a laser fusion method (SLS), and the core part (1) being made of very high temperature thermoplastic resin.

2. Method according to Claim 1, **characterized in that** the very high temperature thermoplastic resin is of PEEK (polyetheretherketone) type.

3. Method according to any one of the preceding claims, **characterized in that** the hardening of the resin is obtained by a phase of consolidation or polymerisation of said resin.

4. Method according to any one of the preceding claims, **characterized in that** the jacketing of the core part (1) is performed by using a method for drape forming the core part (1) with laps or fabrics preimpregnated with resin.

5. Method according to any one of Claims 1 to 3, **characterized in that** the jacketing of the core part (1) is performed by using a resin transfer moulding method.

6. Method according to any one of the preceding claims, **characterized in that**, in the step 100 of creation of the core part (1), at least a part of the surface of said core part (1) intended to receive the fibres (5) is roughened to promote the mechanical keying with the fibre impregnation resin.
